# EUROPEAN PATENT SPECIFICATION

(11) **EP 3 119 943 B1**
(45) Date of publication and mention of the grant of the patent: **22.11.2017**
(21) Application number: 14711516.6
(22) Date of filing: 20.03.2014
(51) Int. Cl.: E03B 7/00, E03B 7/07, F17D 5/02, G01M 3/18, G01M 3/28, G01F 15/075

(54) **DRIPPING ALERT FUNCTION**
TROPFALARMFUNKTION
FONCTION D'ALERTE GOUTTE-À-GOUTTE

(43) Date of publication of application: 25.01.2017
(73) Proprietor: Husqvarna AB, 56182 Huskvarna (SE)
(72) Inventor: GUNGL, Johannes, 89079 Ulm-Eggingen (DE); SOOR, Florian, 89312 Günzburg (DE)
(74) Representative: Finkele, Rolf
(86) International application number: PCT/EP2014/055648
(87) International publication number: WO 2015/139760

(56) References cited:
- EP-A2- 2 058 442
- WO-A1-2005/095916
- WO-A1-2013/076721
- DE-C1- 3 904 487
- GB-A- 2 504 355
- US-A1- 2009 194 719
- US-A1- 2009 223 285
- US-B1- 7 574 896

## Description

### TECHNICAL FIELD

Example embodiments generally relate to water supply equipment and, more particularly, relate to a system for accurately determining when water supply equipment is experiencing a leak.

### BACKGROUND

Gardening and various other household tasks require a pressurized water supply in order to deliver water to various consumers of water (i.e., devices that apply or use the water). Some people receive water from public sources that are pressurized to supply water to their homes. However, others utilize (by choice or necessity) alternative water supplies and therefore need a mechanism to pressurize the water for distribution.

Washing machines, sprinkler systems, hoses, water applicators, water taps (or spigots) and the like may all be consumers of water within a home or business. As such, these devices may be components of a system to which water can be pumped under the supervision of a controller that can control pumps and/or valves of the system to provide pressure in the supply line for any of the devices listed above to dispense or use. Water for such a system may be sourced from a public water supply, from a well, or from a cistern or other water sources that may be specific to a home or business.

In some cases, the system may employ an electronic pressure pump that interfaces with a pressure sensor and/or flow sensor in the system to control switching the pump on and off. If no water flow is detected at an outlet line of the pump (or if the pressure increases to an upper threshold limit), the pump may assume that there is no active consumer (e.g., all water dispensing equipment is off) and stop the motor of the pump. As soon as the pressure drops below a certain threshold value (e.g., due to opening a water dispenser), the pump may be started to pressurize the system to serve the consumer. Thus, the flow sensor and pressure sensor may work together to start and stop the pump.

If a leak occurs in the system, the pressure drop may be detected and the pump may start. In some cases, as the pressure increases in the line without significant water flow, the pump may stop and the system may continuously cycle between turning the pump on and off in response to the leak situation. Accordingly, it may be desirable to provide some form of leak detection to stop the pump from falling into the cycle described above.

The European patent application EP 2 058 442 A2 (hereinafter referred to as the application '442) relates to a system for controlling flow of water in a building. The system of the application '442 can distinguish between a rate of flow indicative of a genuine water demand and a rate of flow indicative of unwanted low-level water loss. The document EP 2 058 442 A2 is considered to represent the closest prior art. This document discloses the technical features described in the preamble of the independent claims. The system can also connect the inlet to the water supply when genuine water demand is identified. The Great Britain patent application GB 2 504 355 A (hereinafter referred to as the application '355) relates to a water removal and storage system which is adapted to shut off a mains water supply line from a water pipe in a building structure. Further, the application '355 discloses a flow transducer, a pressure transducer, and a temperature transducer which are interfaced with a microcontroller. The transducers of the application '355 provide measurement data to the microcontroller to control operations of the valve and the pump.

The US patent application US 2009/0223285 A1 (hereinafter referred to as application'285) relates to a method for permanently monitoring pressurized pipelines and line systems. The method of the application'285 involves comparing pressure drop determined with predefined fixed value to determine a minor leakage. The WIPO patent application WO 2005/095916 A1 (hereinafter referred to as the application '916) relates to a method for actively monitoring pipelines guiding pressurized media and consumers, which are connected to the respective pipeline or pipeline system. The method of the application '916 involves detecting leakage and triggering an alarm or blocking a downstream pipeline system when permanent and quasi-constant consumption takes place during a specific time period.

The US patent application US 2009/0194719 A1 relates to a fluid supply monitoring system including a shutoff valve to selectively block the fluid flow and an indicator to selectively communicate a signal to the shutoff valve for preventing the shutoff valve from blocking the fluid flow. The WIPO patent application WO 2013/076721 A1 relates to a method involving an operating control unit of an apparatus arranged between a supply of liquid and a network of conduits, to detect a leak of liquid in the network.

The German patent application DE 3 904 487 C1 relates to a method for leakage testing a non-compressible fluid line system by feeding test fluid into a line over a test period in which the line is shut off by a main valve for pressure testing. The US patent US 7 574 896 B1 (hereinafter referred to as the patent '896) relates to an apparatus for detecting and controlling fluid leaks in a pressurized piping system. The apparatus of the patent '896 includes control logic, a flow detector and/or a pressure detector, and a control valve. The patent '896 also discloses a remote control device to remotely interact with the control logic, and to perform a leak test on demand at any time from a remote or proximate location.

Therefore, in light of the foregoing, there is a need for an improved method and system for providing leak detection for the pump.

### BRIEF SUMMARY OF SOME EXAMPLES

Some example embodiments may therefore provide a controller that may be configured to detect leakage scenarios and stop pump operation accordingly. However, some example embodiments may further be enabled to detect situations where modern water consumers might provide confusing indications to the controller that might mistakenly be identified as leak situations.

A water distribution system may include a pump assembly and a controller that controls operation of the pump assembly. The controller may be configured to control cycling of the pump assembly on and off based on pressure and flow conditions detected in the system, track a first period of time, count a number of on/off cycles of the pump assembly, determine whether to make a state change based on the number of on/off cycles and the first period of time, and, in response to determining to make the state change, set a timer configured to count a second period of time that is longer than the first period of time and counting on/off cycles during discrete periods of time for the second period of time to initiate a fault response in response to a predetermined number of on/off cycles being detected during each discrete period of time during the second period of time or if the second period of time has lapsed, or initiate a recovery from the state change in response to the predetermined number of on/off cycles not being detected during at least one discrete period of time during the second period of time.

In another example embodiment, a method of controlling a water distribution system that includes a pump assembly and a controller that controls operation of the pump assembly is provided. The method may include controlling cycling of the pump assembly on and off based on pressure and flow conditions detected in the system, tracking a first period of time, counting a number of on/off cycles of the pump assembly, and determining whether to make a state change based on the number of on/off cycles and the first period of time. The method may further include, in response to determining to make the state change, setting a timer configured to count a second period of time that is longer than the first period of time and counting on/off cycles during discrete periods of time for the second period of time in order to a) initiate a fault response in response to a predetermined number of on/off cycles being detected during each discrete period of time during the second period of time or if the second period of time has lapsed, or b) initiate a recovery from the state change in response to the predetermined number of on/off cycles not being detected during at least one discrete period of time during the second period of time.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a block diagram of a water distribution system in accordance with an example embodiment;
FIG. 2 illustrates a timing diagram showing a number of cycles of the pump assembly between on and off states and the timing of operations according to first and second variations of a method for leakage detection in accordance with an example embodiment;
FIG. 3 illustrates a timing diagram showing a number of cycles of the pump assembly between on and off states and the timing of operations according to third and fourth variations of a method for leakage detection in accordance with an example embodiment;
FIG. 4 illustrates a block diagram of an algorithm for leakage detection in accordance with an example embodiment;
FIG. 5 illustrates a block diagram of an alternative algorithm for leakage detection in accordance with an example embodiment;
FIG. 6 illustrates a block diagram of another alternative algorithm for leakage detection in accordance with an example embodiment;
FIG. 7 illustrates a timing diagram showing a number of cycles of the pump assembly between on and off states and the timing of operations according to algorithms similar to those of FIGS. 4 and 5 for leakage detection in accordance with an example embodiment;
FIG. 8 illustrates a timing diagram showing a number of cycles of the pump assembly between on and off states and the timing of operations according to an algorithm similar to that of FIG. 6 for leakage detection in accordance with an example embodiment; and
FIG. 9 illustrates a block diagram for a method of leakage detection in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. As used herein, the term cycle should be understood as an on/off cycle that can be measured from an on event to a next on event, from an off event to a next off event, from an off event to a next on event, or even from an on event to a next off event.

Some example embodiments described herein provide an improved design for a controller and an algorithm for execution by the controller to detect leakage in water supply system. Referring to the situation described above, one approach to performing leakage detection may be to monitor the switching operation of the pump to determine whether the switching of the pump appears to follow a pattern that may be expected if there is a leak. This may be done a couple of different ways. Generally speaking, however, a controller may monitor pump operation to determine a number of switching on/off operations and a time period. The comparison of the number of switching on/off operations, n, to a predetermined threshold period of time t1, may be used to determine whether a leakage situation can be identified by the controller and the controller may stop pump operations and/or display a message to the operator (e.g., an error message) when leakage is detected.

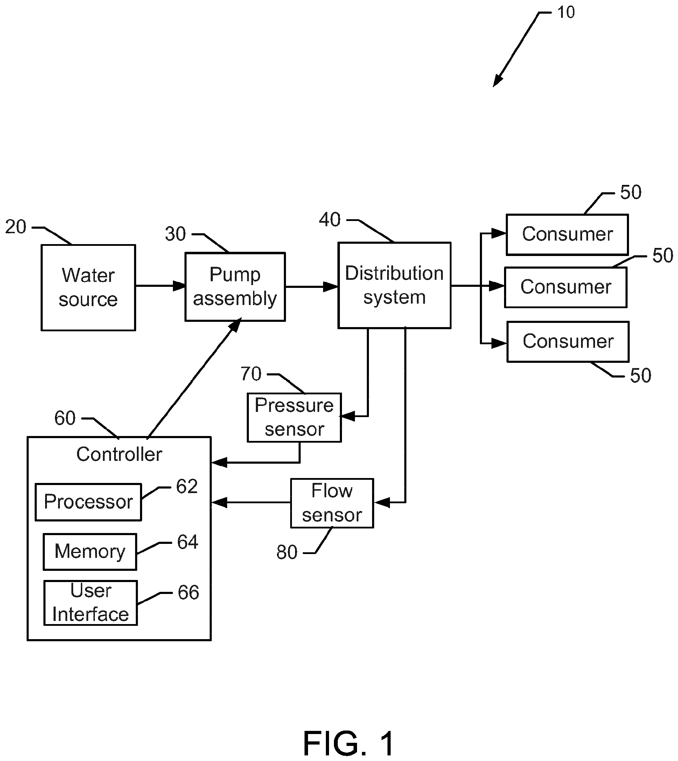

FIG. 1 illustrates an example system 10 in which an example embodiment may be employed. The system 10 may include a water source 20, a pump assembly 30, a distribution system 40 and a plurality of consumers 50. The pump assembly 30 may be selectively operated by a controller 60 that interfaces with a pressure sensor 70 and/or a flow sensor 80. The pressure sensor 70 and flow sensor 80 may monitor pressure and flow conditions, respectively, in the distribution system 40, which may include an outlet of the pump assembly 30 and all distribution piping, headers, hoses, valves or other distribution hardware that connects the pump assembly 30 to the consumers 50. Accordingly, the pressure sensor 70 and flow sensor 80 could be part of the pump assembly 30, part of the distribution system 40 or separate from such components, but in communication therewith to monitor conditions therein. The consumers 50 may be any water application devices (e.g., sprinkler heads, water taps, etc.) or other users of water within the system 10.

The pump assembly 30 may include a pump and motor. The motor may be powered selectively based on control implemented by the controller and when the motor operates, the pump may pressurize the distribution system 40 responsive to drawing water from the water source 20. As mentioned above, the water source 20 may be a public water supply, a well, a cistern or other water sources that may be specific to a home or business. The controller 60 may monitor pressure and flow in the distribution system 40 using the pressure sensor 70 and the flow sensor 80 to control the pump assembly 30 as described above. In this regard, when flow is detected and pressure drops, the controller 60 may start the pump assembly 30 to raise the system pressure and maintain the pressure to support the flow. When flow is stopped, the pump assembly 30 may be stopped. This may be detected as an on/off cycle, and may continue as needed to supply the consumers 50 on a continuous or intermittent basis.

If a leak occurs in the system 10, the pressure drop may be detected and the pump assembly 30 may be started, but increase to the cutoff pressure relatively quickly and flow stops so that the pump is stopped. Meanwhile, shortly after shutdown of the pump assembly 30, the pressure may again drop with flow going out the leak, so the pump assembly 30 may be triggered by the controller 60 to start again. Thus, on/off cycles may occur in relatively quick succession. To mitigate this situation, it may be desirable to configure the controller 60 to detect the leakage based on considering the number of on/off cycles and time.

There may be a number of variations on how the controller 60 uses the time information and pump on/off cycles to determine a leak. For example, according to a first variation, the controller 60 may be configured to count the number of on/off cycles until a predetermined number, n, is reached. When the predetermined number of cycles is reached (i.e., when the number of cycles = n), the time, t, that it has taken to reach the predetermined number of cycles may be compared to the predetermined threshold period of time, t1. If t is greater than t1, then controller 60 may be configured to assume that there is no leakage. However, if t is less than t1, then the controller 60 may be configured to assume that there is a leak.

According to a second variation, a series of counting operations may be performed in parallel on a rolling basis by counters. Counters may be separate components in communication with the controller 60, or may be programmed functions capable of execution by the controller 60. Each time a new on/off cycle is detected, one of a plurality of counters (max. n) will be started. With each of the counters, the elapsed time, t, for the number of cycles to reach the predetermined number of cycles, n, is measured. If any of the counters reaches the predetermined number of cycles, n, in a time, t, that is less than t1, then a leak is detected by the controller 60. However, if t is greater than t1 for each counter, no leakage is detected.

As shown in FIG. 1, the controller 60 may include one or more instances of a processor 62 and memory 64, and in some cases may also include a user interface 66. The processor 62 and memory 64 may define processing circuitry that may be configurable to perform various functions or tasks as described herein. As such, the control unit 60 may be configured to perform data processing, control function execution and/or other processing and management services according to an example embodiment of the present invention. In some embodiments, the controller 60 may be embodied as a chip or chip set. In other words, the controller 60 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The controller 60 may therefore, in some cases, be configured to implement an embodiment of the present invention on a single chip or as a single "system on a chip." As such, in some cases, a chip or chipset may constitute means for performing one or more operations for providing the functionalities described herein.

The user interface 66, if employed, may be in communication with the processing circuitry to receive an indication of a user input at the user interface 66 and/or to provide an audible, visual, tactile or other output to the user. As such, the user interface 66 may include, for example, a display, one or more levers, switches, buttons or keys (e.g., function buttons), and/or other input/output mechanisms. In an example embodiment, the user interface 66 may include one or a plurality of lights, a display, a speaker, a tone generator, a vibration unit and/or the like, and an input mechanism to enable the user or operator to select various timing values and/or enable or disable certain functions of the controller 60 as described herein.

The processor 62 may be embodied in a number of different ways. For example, the processor 62 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 62 may be configured to execute instructions stored in the memory 64 or otherwise accessible to the processor 62. As such, whether configured by hardware or by a combination of hardware and software, the processor 62 may represent an entity (e.g., physically embodied in circuitry - in the form of processing circuitry) capable of performing operations according to embodiments of the present invention while configured accordingly. Thus, for example, when the processor 62 is embodied as an ASIC, FPGA or the like, the processor 62 may be specifically configured hardware for conducting the operations described herein. Alternatively, as another example, when the processor 62 is embodied as an executor of software instructions, the instructions may specifically configure the processor 62 to perform the operations described herein.

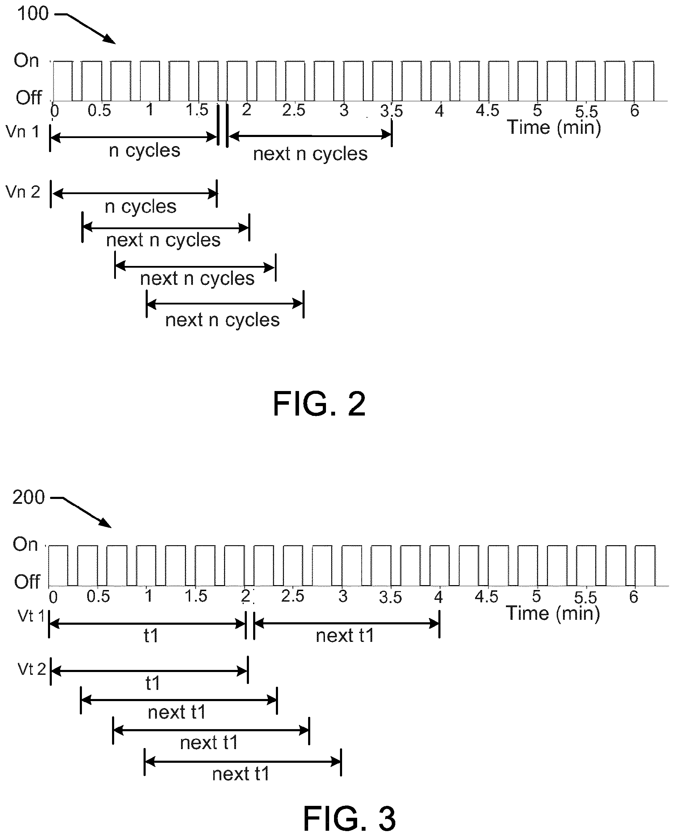

In an exemplary embodiment, the memory 64 may include one or more non-transitory memory devices such as, for example, volatile and/or non-volatile memory that may be either fixed or removable. The memory 64 may be configured to store information, data, applications, instructions or the like for enabling the processing circuitry to carry out various functions in accordance with exemplary embodiments of the present invention. For example, the memory 64 could be configured to buffer input data for processing by the processor 62. Additionally or alternatively, the memory 64 could be configured to store instructions for execution by the processor 62. Among the contents of the memory 64, applications may be stored for execution by the processor 62 in order to carry out the functionality associated with each respective application. In some cases, the applications may include instructions for monitoring pressure/flow to control the pump assembly 30 and instructions to execute leak detection algorithms as described herein in connection with FIGS. 2-9 below.

FIG. 2 illustrates a timing diagram 100 showing a number of cycles of the pump assembly 30 between on and off states. In the example of FIG. 2, the predetermined number of cycles, n=6. Vn1 indicates an example of the first variation above. In this regard, when 6 cycles have been experienced, the corresponding time it has taken is examined. In this example, 6 cycles occurred in a time t of about 1.75 minutes in the first instance of n cycles and occurred again in about 1.75 minutes in the second instance of n cycles. If the time t (1.75 minutes) is less than the predetermined threshold period of time, t1, then leakage is indicated. Accordingly, for example, if t1 is 2 minutes, then Vn1 indicates a leakage situation. However, if t1 is 1.5 minutes, then Vn1 indicates no leakage.

Vn2 indicates an example of the second variation described above. Thus, there are multiple rolling counts of cycles from each instance of an on/off cycle (up to a predetermined maximum number of instances). If any one of the count instances reaches the predetermined number of cycles (i.e., 6 in this example) prior to t1 being reached, then a leak is indicated.

According to a third variation, the controller 60 is configured to count cycles for the period of time t1. If the number of cycles detected in the time period t1 is greater than n, then a leak is detected. However, if the number of cycles detected in the time period t1 is less than n, then there is no leakage detected.

According to a fourth variation, a rolling series of parallel counting operations are performed by the controller 60. Thus, each time a new on/off cycle is detected, an additional time measurement is started with the number of cycles counted for the given time period t1. If any of the parallel measurements achieves the number of cycles detected in the time period t1 that is greater than n, a leak is detected by the controller 60. For any of the measurements above, the controller 60 may stop the pump assembly 30 and/or issue a notification to the operator. In some cases, the pump assembly 30 may be stopped until the operator initiates a reset operation, or otherwise takes action to clear the detected fault (i.e., leakage) condition.

FIG. 3 illustrates a timing diagram 200 showing a number of cycles of the pump assembly 30 between on and off states. In the example of FIG. 3, the predetermined threshold period of time, t1, is 2 minutes. Thus, according to Vt1, which indicates an example of the third variation described above, the number of cycles encountered is counted for 2 minutes (i.e., time t1). In this case, 7 cycles were counted in the first instance of counting for 2 minutes. Accordingly, if the predetermined number of cycles, n=6, then more than the predetermined number of cycles was experienced in the time t1, so leakage is indicated. However, if n was a higher value (say 8), then Vt1 would indicate no leakage.

Vt2 indicates an example of the fourth variation described above. Thus, there are multiple rolling counts of cycles from each instance of an on/off cycle (up to a predetermined maximum number of instances) for a time t1. If any one of the count instances exceeds the predetermined number of cycles (i.e., 6 in this example) when the time t1 is reached, then a leak is indicated. In some cases, it may be appreciated that a new time measurement could be started at any time and thus, the start of any time measurement period need not be correlated to a particular even such as an on or off event.

The above described variations on using the on/off cycles and a measurement of time for leak detection may work fairly well in most situations. However, in some cases, some of the consumers 50 may have flow demands that tend to mimic or resemble leakage conditions, which could create a problem for the operator. For example, a washing machine may be the consumer 50 in some cases. In particular, certain newer washing machine models may have water demand cycles that require short on/off cycles in order to minimize water consumption. Given the potential for demand cycles for water flow being detected at relatively short intervals, it is possible that a newer washing machine (e.g., a high efficiency machine) may trigger fault detection based on leakage by the controller 60. The operator may become frustrated with continually needing to reset the pump assembly 30 or clear fault conditions at the controller 60.

Operators dealing with the situation above may deal with the problem by disabling leakage detection if they understand the nature of the problem. However, if they do not understand what is causing the shutdowns and fault conditions, the operators may return their pump assembly as being defective. Even a sophisticated operator that fully understand the problem and wants to manipulate the operation of the controller 60 (e.g., to increase the time period monitored and/or the number of cycles that must be detected for leak indication) may not arrive at a satisfactory solution. For example, if the normal detection algorithm detects 6 on/off cycles in 2 minutes to classify a leak, the operator may decide to extend the time and number of cycles to 60 minutes and 180 cycles. However, if the pump assembly 30 is connected to an appliance that is opened every 15 seconds and closed again immediately, the pump assembly 30 may be switched on and off according to this cycle. If the cycle is maintained for 45 minutes, 180 switch operations will still be achieved and the controller 60 may stop the pump assembly 30 and/or indicate a fault condition even if the opening cycle will return to normal after the initial 45 minute interval. Accordingly, it may be desirable to develop a better way to detect leakage scenarios.

An example embodiment may therefore be provided to allow any one of the above described leakage determining variations to be employed (or any other version that uses a comparison of the number of cycles in a measurable time period) for an initial status determination. If the above described methods indicate a possible leak, then the controller 60 may trigger a mode (or state) shift. If there is no state shift, the controller 60 may continue to monitor according to the corresponding variation for leakage determining.

In situations where a state shift occurs (i.e., there is a shift to a "washer detection" state), a second timer may be started and run for a second time period longer than the first time period t1. The second (longer) time period, tT, may be used to monitor to determine whether repeated leakage indications are received, or whether at least one non-leakage indication can be received during the time period tT to indicate that the leakage indication was likely due to equipment used as a consumer 50, instead of being due to an actual leak.

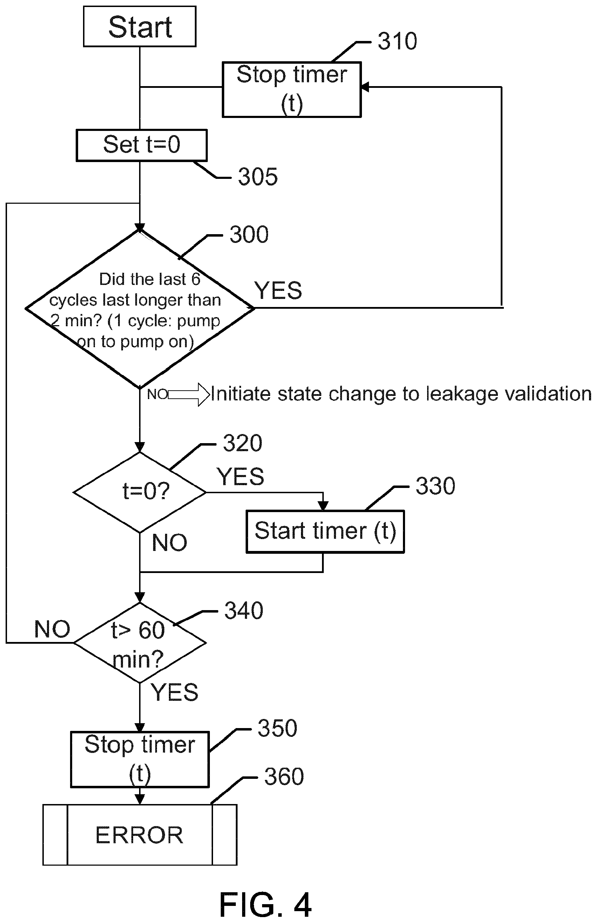

An example embodiment will be described in connection with the flow diagram of FIG. 4. Of note, FIG. 4 is based on the first variation above (i.e., Vt1), but it should be appreciated that the flow diagram could be modified to be based on any of the other variations as well. Referring to FIG. 4, cycles may be counted to determine whether the last 6 cycles occurred in a space of time longer than two minutes at operation 300. In other words, a determination may be made as to whether n cycles occurred in time t that was greater than t1. If it took longer than 2 minutes to achieve 6 cycles, a timer (t) may be stopped at operation 310 and set to t=0 at operation 305 and operation 300 may be repeated. However, if 6 cycles were achieved in less than two minutes, a state change may occur (to a state that validates a potential leakage condition).

The state change may involve modifying the first variation above to test whether any non-leakage indication can be received in a second period of time (e.g., tT = 60 minutes) that is longer than the first period of time (e.g., 2 minutes). At operation 320, a determination may be made as to whether t=0 (i.e., whether the timer is being started or already running). If t=0, then the timer may be started at operation 330 and flow may proceed to operation 340. If the timer is already running (i.e., t does not = 0), then flow immediately proceeds to operation 340, where it is determined as to whether the longer period of time (e.g., 60 minutes) has been reached. If the 60 minute time period has not been reached, then flow returns to operation 300 for another check to see if 6 cycles can be achieved in a period longer than 2 minutes. If 6 cycles are ever achieved in the time period longer than 2 minutes while the longer timer count is less than 60 minutes, then flow proceeds to operations 305 and 310 and the timer is reset. This may act as a recovery from the state change (i.e., a recovery from the validation of the potential leakage condition due to confirmation of no leakage). However, if 6 cycles are continually received in less than 2 minutes for the entire 60 minute period, flow will proceed to operation 350 where the timer will be stopped and a fault or error indication is generated at operation 360.

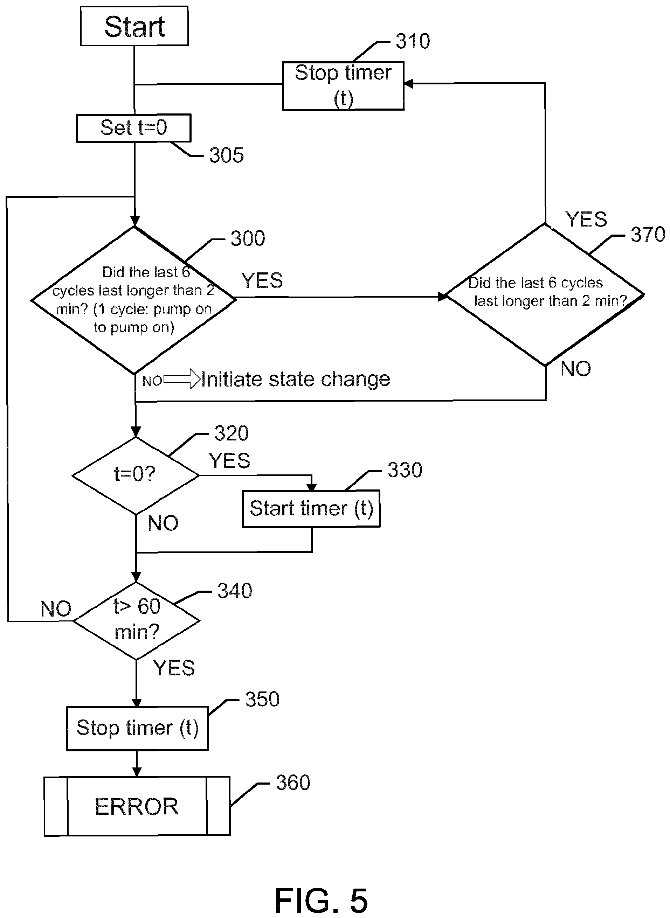

FIG. 5 is a modification to the example of FIG. 4. In the example of FIG. 5, an additional check may be initiated at operation 370 to indicate that there is no leakage before the timer can be stopped and reset at operations 305 and 310. In other words, two consecutive non-leakage indications must be required to avoid the state change, or to cause the recovery from the state change to be permitted after the state change is triggered (e.g., based on receiving a "no" out of operation 300).

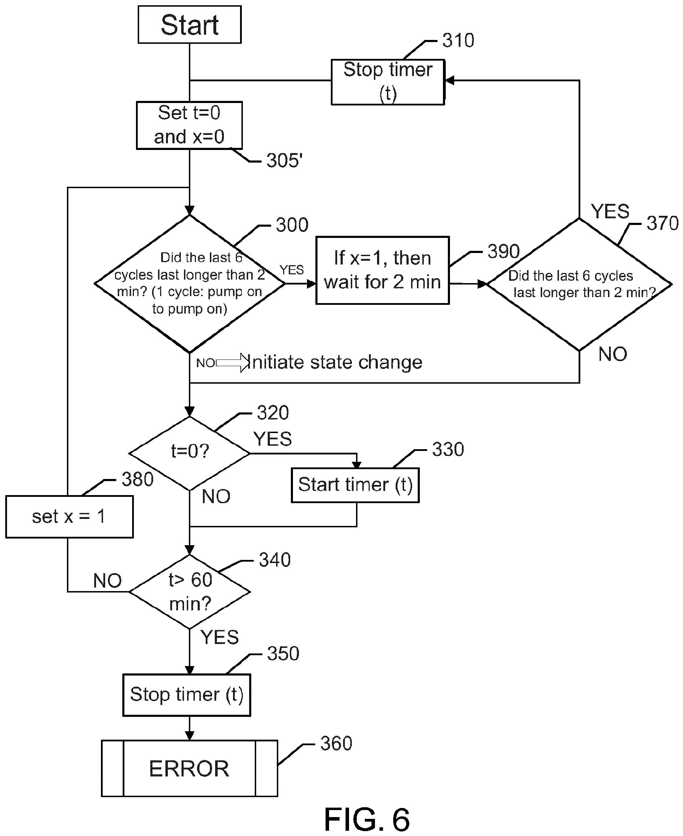

FIG. 6 is a further modification of the example of FIG. 5 in which a wait period may be initiated after a first leakage indication is received before checking to see if a second consecutive non-leakage indication can be achieved. Thus, for example, the flow may be the same as in FIG. 5 except that a value may be set (e.g., x=1) at operation 380 when the long timer is running and a leakage indication is received (e.g., based on receiving a "no" out of operation 300). If a non-leakage indication is received (e.g., based on receiving a "yes" out of operation 300), while the timer is already running (i.e., x=1) then a wait period may be inserted (e.g., 2 minutes) at operation 390 before performing another leakage check at operation 370. However, the wait period need not be waited if x does not = 1, which means that no initial leakage indication was received. Thus, when the recovery from the state change is being performed, a wait period must be traversed. But if no state change was initiated, then no wait period need be traversed. After the second leakage check at operation 370 is performed, and no leakage is detected (i.e., a "yes" is received out of operation 370), the timer may be stopped at operation 310 and t may be set to 0 and x also set to 0 at operation 305'.

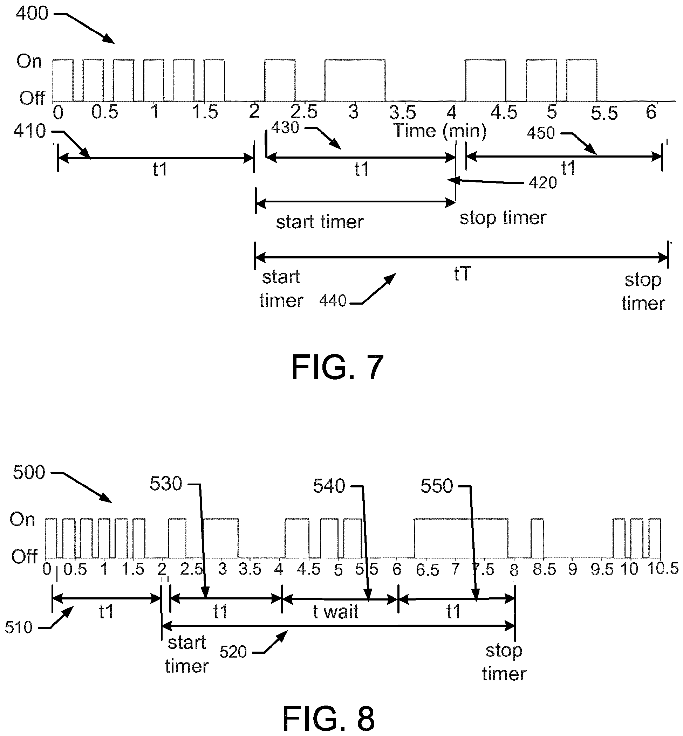

FIG. 7 illustrates a timing diagram 400 showing an example according to FIG. 4 above (except that a fixed time count of cycles is performed instead of measuring time for a fixed number of cycles). In this regard, the timing diagram 400 shows a number of cycles of the pump assembly 30 between on and off states. In the example of FIG. 7, the predetermined threshold period of time (i.e., a first period of time), t1, is 2 minutes and the predetermined number of cycles, n=6. Thus, the controller 60 counts the time period t1 and notes the number of cycles in each such time period. During the first time period 410, at least 6 on/off cycles are noted. Thus, according to FIG. 4 (with the time based cycle counting modification being understood), at least 6 cycles were counted in two minutes, so the state change is initiated to trigger validation of a potential leakage condition. A longer timer is then started to count the second time period tT as shown at line 420. However, during the second instance of the running of the timer for the first period of time, t1, at line 430, there are now less than 6 cycles encountered in the two minute space of time. Accordingly, a recovery from the state change can be accomplished (e.g., via operation 300 to 310 of FIG. 4) and the controller 60 may return to normal operation. Alternatively, if the example of FIG. 5 above were practiced (i.e., requiring two consecutive non-leakage indications to trigger recovery from the state change), then the second timer may run at line 440 and the count of cycles may be less than 6 for the second instance of the running of the first time period at line 430. This would occur during the second instance of performing operation 300 in FIG. 5. However, rather than immediately initiating the recovery from the state change, a third instance of the running of the timer for the first time period is accomplished at line 450. During this period also, less than 6 cycles are encountered. Thus, according to operation 370 of FIG. 5, the recovery from the state change may be triggered.

FIG. 8 illustrates a timing diagram 500 for a modification of the embodiment of FIG. 7 in which the wait period defined in the example of FIG. 6 is employed (except that the example of FIG. 8 relates to counting cycles in a fixed time period instead of counting a fixed number of cycles, as shown in the example of FIG. 6). As shown in FIG. 8, during the first time period 510, at least 6 cycles are detected. Accordingly, the state change is initiated (to conduct leakage validation) and the timer is started (similar to operations 320 and 330 of FIG. 6) so that the longer timer begins to run as shown at line 520. During a second instance of the first time period at 530, less than six cycles are noted. Thus, referring to the similar example of FIG. 6, the second time period was confirmed to still be active at operation 340 and x was set to 1 at operation 380 so that operation 300 could be repeated (based on time, not cycle number, as mentioned above) during the second instance of the first time period at 530. When it is determined that there are less than six cycles during the second instance of the first time period (corresponding to the second instance of operation 300), since x=1, the wait period of operation 390 may be initiated as shown by time period 540. Another instance of a leakage check may be conducted during a third instance of the timer run 550 for the first time period (e.g., conducting operation 370 of FIG. 6) and, since less than 6 cycles are counted during this period, the longer timer may be stopped (at operation 310) as shown by the termination of line 520.

As mentioned above, the user interface 66 may be used to set a timing value for any or all of the first period of time, the second period of time or the discrete period of time. Furthermore, the user interface 66 may be employed to conduct mode changes for the operation of the controller 60. For example, the user interface 66 may be used to shift between a first mode in which initiating the leakage validation process is disabled, and a second mode in which initiating the leakage validation process is enabled. In some cases, the user interface 60 might further be enabled to provide the operator with a selection option to disable leakage detection functionality entirely.

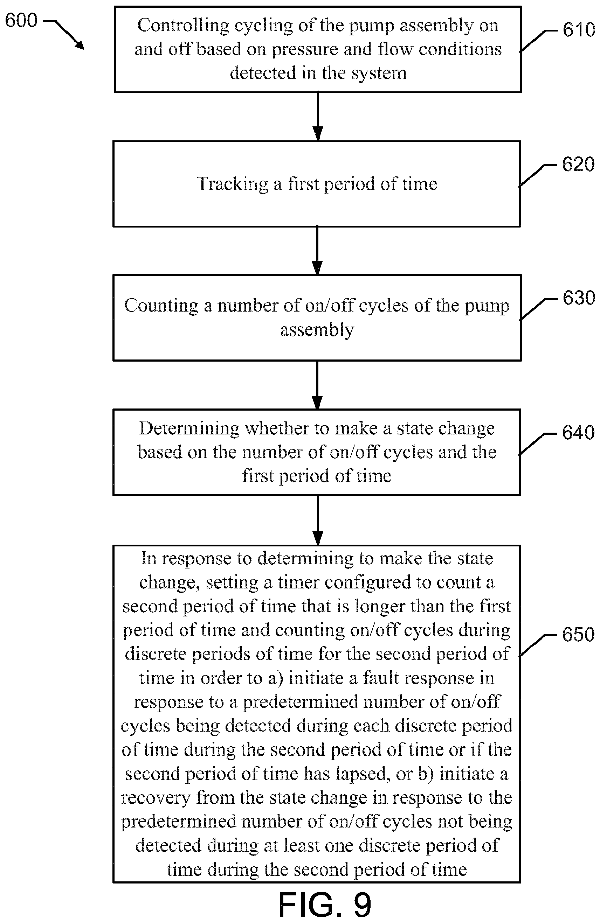

FIG. 9 illustrates a block diagram of a method 600 of controlling a water distribution system that includes a pump assembly and a controller that controls operation of the pump assembly. The method 600 may include controlling cycling of the pump assembly on and off based on pressure and flow conditions detected in the system at operation 610, tracking a first period of time at operation 620, counting a number of on/off cycles of the pump assembly at operation 630, and determining whether to make a state change based on the number of on/off cycles and the first period of time at operation 640. The method may further include, in response to determining to make the state change, setting a timer configured to count a second period of time that is longer than the first period of time and counting on/off cycles during discrete periods of time for the second period of time in order to a) initiate a fault response in response to a predetermined number of on/off cycles being detected during each discrete period of time during the second period of time or if the second period of time has lapsed, or b) initiate a recovery from the state change in response to the predetermined number of on/off cycles not being detected during at least one discrete period of time during the second period of time at operation 650.

A water distribution system may be provided in accordance with an example embodiment. The system may include a pump assembly and a controller that controls operation of the pump assembly. The controller may be configured to control cycling of the pump assembly on and off based on pressure and flow conditions detected in the system, track a first period of time, count a number of on/off cycles of the pump assembly, determine whether to make a state change based on the number of on/off cycles and the first period of time, and, in response to determining to make the state change, set a timer configured to count a second period of time that is longer than the first period of time and counting on/off cycles during discrete periods of time for the second period of time to initiate a fault response in response to a predetermined number of on/off cycles being detected during each discrete period of time during the second period of time or if the second period of time has lapsed, or initiate a recovery from the state change in response to the predetermined number of on/off cycles not being detected during at least one discrete period of time during the second period of time.

The system employing the features of some embodiments may include additional features that may be optionally added either alone or in combination with each other. For example, in some embodiments, (1) making the state change may include initiating a leakage validation process, and initiating a recovery from the state change may include resetting the timer configured to count the second period of time and exiting the leakage validation process. In another example embodiment, (2) initiating the recovery from the state change may include determining whether, during the second period, there is at least a second instance in which the predetermined number of on/off cycles is not detected during a corresponding second discrete period of time, and resetting the timer configured to count the second time period and exiting the leakage validation process entered when the state change was made in response to determining an occurrence of the second instance, or entering the leakage validation process in response to the predetermined number of on/off cycles being detected during a corresponding second discrete period of time. In some cases, (3) the controller may be configured to initiate a wait period prior to determining whether, during the second instance, there is at least a second time period in which the predetermined number of on/off cycles is not detected.

In some embodiments, any or all of (1) to (3) may be employed in addition to the optional modifications or augmentations described below. For example, in some embodiments, the first period of time and the discrete period of time may be equal. Additionally or alternatively, determining whether to make a state change may include determining whether a threshold number of on/off cycles occurred in the first period of time. Additionally or alternatively, determining whether to make a state change may include initiating a separate time count from each of a plurality of on/off cycles and determining, for each separate time count, whether a threshold number of on/off cycles occurred in a corresponding instance of the first period of time. Additionally or alternatively, determining whether to make a state change may include counting a number of on/off cycles that occurred until a threshold number of cycles is reached, and comparing a time to reach the threshold number of cycles to the first period of time. Additionally or alternatively, determining whether to make a state change may include counting, from each of a plurality of on/off cycle instances, a number of on/off cycles that occurred until a threshold number of cycles has reached, and comparing a time to reach the threshold number of cycles to the first period of time. Additionally or alternatively, the system may further include a user interface. The user interface may be operable to select between a first mode in which initiating the leakage validation process is disabled, and a second mode in which initiating the leakage validation process is enabled. Additionally or alternatively, the user interface may be configured to enable an operator to select a value for the first period of time, the second period of time or the discrete period of time. Alternatively or additionally, the user interface may be configured to enable the operator to select a third mode in which determining whether to make the state change is disabled.

## Claims

1. A water distribution system (10) including a pump assembly (30) and controller (60) that controls operation of the pump assembly (30), **characterized in that** the controller (60) being configured to:
control cycling of the pump assembly (30) on and off based on pressure and flow conditions detected in the system (10);
track a first period of time;
count a number of on/off cycles of the pump assembly (30);
determine whether to make a state change based on the number of on/off cycles and the first period of time; and
in response to determining to make the state change, set a timer configured to count a second period of time that is longer than the first period of time and counting on/off cycles during discrete periods of time for the second period of time to:
initiate a fault response in response to a predetermined number of on/off cycles being detected during each discrete period of time during the second period of time or if the second period of time has lapsed, or
initiate a recovery from the state change in response to the predetermined number of on/off cycles not being detected during at least one discrete period of time during the second period of time.

2. The system (10) of claim 1, wherein making the state change comprises initiating a leakage validation process, and wherein initiating a recovery from the state change comprises resetting the timer configured to count the second period of time and exiting the leakage validation process.

3. The system (10) of claim 1, wherein making the state change comprises initiating a leakage validation process, and wherein initiating the recovery from the state change comprises:
determining whether, during the second period, there is at least a second instance in which the predetermined number of on/off cycles is not detected during a corresponding second discrete period of time, and
resetting the timer configured to count the second time period and exiting the leakage validation process entered when the state change was made in response to determining an occurrence of the second instance, or re-entering the leakage validation process in response to the predetermined number of on/off cycles being detected during a corresponding second discrete period of time.

4. The system (10) of any preceding claim, wherein determining whether to make a state change comprises determining whether a threshold number of on/off cycles occurred in the first period of time.

5. The system (10) of any of claims 1-3, wherein determining whether to make a state change comprises initiating a separate time count from each of a plurality of on/off cycles and determining, for each separate time count, whether a threshold number of on/off cycles occurred in a corresponding instance of the first period of time.

6. The system (10) of any of claims 1-3, wherein determining whether to make a state change comprises counting a number of on/off cycles that occurred until a threshold number of cycles is reached, and comparing a time to reach the threshold number of cycles to the first period of time.

7. The system (10) of any of claims 1-3, wherein determining whether to make a state change comprises counting, from each of a plurality of on/off cycle instances, a number of on/off cycles that occurred until a threshold number of cycles has reached, and comparing a time to reach the threshold number of cycles to the first period of time.

8. The system (10) of any preceding claim, wherein the user interface (66) is configured to enable an operator to select a value for at least one of the first period of time, the second period of time or the discrete period of time.

9. A method (600) of controlling a water distribution system (10) that includes a pump assembly (30) and controller (60) that controls operation of the pump assembly (30), **characterized in that** the method comprising:
controlling cycling of the pump assembly on and off based on pressure and flow conditions detected in the system (610);
tracking a first period of time (620);
counting a number of on/off cycles of the pump assembly (630);
determining whether to make a state change based on the number of on/off cycles and the first period of time (640); and
in response to determining to make the state change, setting a timer configured to count a second period of time that is longer than the first period of time and counting on/off cycles during discrete periods of time for the second period of time to:
initiate a fault response in response to a predetermined number of on/off cycles being detected during each discrete period of time during the second period of time or if the second period of time has lapsed, or
initiate a recovery from the state change in response to the predetermined number of on/off cycles not being detected during at least one discrete period of time during the second period of time (650).

10. The method (600) of claim 9, wherein making the state change comprises initiating a leakage validation process, and wherein initiating a recovery from the state change comprises resetting the timer configured to count the second period of time and exiting the leakage validation process.

11. The method (600) of claim 10, wherein making the state change comprises initiating a leakage validation process, and wherein initiating the recovery from the state change comprises:
determining whether, during the second period, there is at least a second instance in which the predetermined number of on/off cycles is not detected during a corresponding second discrete period of time, and
resetting the timer configured to count the second time period and exiting the leakage validation process entered when the state change was made in response to determining an occurrence of the second instance, or re-entering the leakage validation process in response to the predetermined number of on/off cycles being detected during a corresponding second discrete period of time.

12. The method (600) of claim 11, further comprising initiating a wait period prior to determining whether, during the second instance, there is at least a second time period in which the predetermined number of on/off cycles is not detected.

13. The method (600) of any of claims 9-12, wherein determining whether to make a state change comprises initiating a separate time count from each of a plurality of on/off cycles and determining, for each separate time count, whether a threshold number of on/off cycles occurred in a corresponding instance of the first period of time.

14. The method (600) of any of claims 9-12, wherein determining whether to make a state change comprises counting a number of on/off cycles that occurred until a threshold number of cycles is reached, and comparing a time to reach the threshold number of cycles to the first period of time.

15. The method (600) of any of claims 9-12, wherein determining whether to make a state change comprises counting, from each of a plurality of on/off cycle instances, a number of on/off cycles that occurred until a threshold number of cycles has reached, and comparing a time to reach the threshold number of cycles to the first period of time.

## Patentansprüche

1. Wasserverteilungssystem (10) mit einer Pumpenanordnung (30) und einer Steuereinrichtung (60), die den Betrieb der Pumpenanordnung (30) steuert, **dadurch gekennzeichnet, dass** die Steuerung (60) so eingerichtet ist, dass sie:
die Ein- und Ausschaltung der Pumpenanordnung (30) auf der Grundlage von Druck- und Strömungsbedingungen, die in dem System (10) erfasst werden, steuert;
eine erste Zeitspanne verfolgt;
eine Anzahl von Ein/Aus-Zyklen der Pumpenanordnung (30) zählt;
bestimmt, ob eine Zustandsänderung auf der Grundlage der Anzahl der Ein/Aus-Zyklen und der ersten Zeitspanne vorzunehmen ist; und
in Reaktion auf die Bestimmung, die Zustandsänderung vorzunehmen, einen Zeitgeber einstellt, der eingerichtet ist, um eine zweite Zeitspanne zu zählen, die länger ist als die erste Zeitspanne, und Zählen von Ein/Aus-Zyklen während einzelner Zeitspannen für die zweite Zeitspanne, um :
eine Fehlerreaktion einzuleiten, in Reaktion auf eine vorbestimmte Anzahl von Ein/Aus-Zyklen, die während jeder einzelnen Zeitspanne während der zweiten Zeitspanne erfasst werden oder wenn die zweite Zeitperiode abgelaufen ist, oder
eine Rücknahme der Zustandsänderung einzuleiten, in Reaktion auf die vorbestimmte Anzahl von Ein/Aus-Zyklen, die während mindestens einer einzelnen Zeitspanne während der zweiten Zeitspanne nicht erfasst werden.

2. System (10) nach Anspruch 1, wobei das Vornehmen der Zustandsänderung das Einleiten eines Leckage-Validierungsprozesses umfasst, und wobei das Einleiten einer Rücknahme der Zustandsänderung das Zurücksetzen des Zeitgebers umfasst, der eingerichtet ist, um die zweite Zeitspanne zu zählen und den Leckage-Validierungsprozess zu verlassen.

3. System (10) nach Anspruch 1, wobei das Vornehmen der Zustandsänderung das Einleiten eines Leckage-Validierungsprozesses umfasst, und wobei das Einleiten der Rücknahme der Zustandsänderung umfasst:
Bestimmen, ob während der zweiten Spanne mindestens eine zweite Instanz vorhanden ist, in der die vorbestimmte Anzahl von Ein/Aus-Zyklen während einer entsprechenden zweiten einzelnen Zeitspanne nicht erfasst wird, und
Zurücksetzen des Zeitgebers, der eingerichtet ist, um die zweite Zeitspanne zu zählen und den Leckage-Validierungsprozess zu verlassen, in den eingetreten wurde, wenn die Zustandsänderung in Reaktion auf die Bestimmung eines Auftretens der zweiten Instanz vorgenommen wurde, oder um in Reaktion auf die vorbestimmte Anzahl von Ein/Aus-Zyklen, die während einer entsprechenden zweiten einzelnen Zeitspanne erfasst werden, wieder in den Leckage-Validierungsprozesses einzutreten.

4. System (10) nach einem der vorhergehenden Ansprüche, wobei das Bestimmen, ob eine Zustandsänderung vorzunehmen ist, das Bestimmen umfasst, ob eine Schwellenanzahl von Ein/Aus-Zyklen in der ersten Zeitspanne aufgetreten ist.

5. System (10) nach einem der Ansprüche 1-3, wobei das Bestimmen, ob eine Zustandsänderung vorzunehmen ist, das Einleiten einer separaten Zeitzählung aus jedem einer Vielzahl von Ein/Aus-Zyklen umfasst und, für jede separate Zeitzählung, das Bestimmen, ob eine Schwellenanzahl von Ein/Aus-Zyklen in einer entsprechenden Instanz der ersten Zeitspanne aufgetreten ist.

6. System (10) nach einem der Ansprüche 1 bis 3, wobei das Bestimmen, ob eine Zustandsänderung vorzunehmen ist, das Zählen einer Anzahl von Ein/Aus-Zyklen, die aufgetreten sind, umfasst, bis eine Schwellenanzahl von Zyklen erreicht ist, und Vergleichen einer Zeit, um die Schwellenanzahl der Zyklen zu erreichen, mit der ersten Zeitspanne.

7. System (10) nach einem der Ansprüche 1 bis 3, wobei das Bestimmen, ob eine Zustandsänderung vorzunehmen ist, aus jeder einer Vielzahl von Instanzen von Ein/Aus-Zyklen das Zählen einer Anzahl von Ein/Aus-Zyklen, die aufgetreten sind, bis eine Schwellenanzahl von Zyklen erreicht wurde, umfasst, und Vergleichen einer Zeit, um die Schwellenanzahl der Zyklen zu erreichen, mit der ersten Zeitspanne.

8. System (10) nach einem der vorhergehenden Ansprüche, wobei die Benutzeroberfläche (66) so eingerichtet ist, dass sie es einem Bediener ermöglicht, einen Wert für mindestens eine aus der ersten Zeitspanne, der zweiten Zeitspanne oder der einzelnen Zeitspanne auszuwählen.

9. Verfahren (600) zur Steuerung eines Wasserverteilungssystems (10) mit einer Pumpenanordnung (30) und einer Steuereinrichtung (60), die den Betrieb der Pumpenanordnung (30) steuert, **dadurch gekennzeichnet, dass** das Verfahren umfasst:
Steuern der Ein- und Ausschaltung der Pumpenanordnung auf der Grundlage von Druck- und Strömungsbedingungen, die in dem System (610) erfasst werden;
Verfolgung einer ersten Zeitspanne (620);
Zählen einer Anzahl von Ein/Aus-Zyklen der Pumpenanordnung (630);
Bestimmen, ob eine Zustandsänderung auf der Grundlage der Anzahl der Ein/Aus-Zyklen und der ersten Zeitperiode (640) vorzunehmen ist; und
in Reaktion auf die Bestimmung, die Zustandsänderung vorzunehmen, Einstellen eines Zeitgebers, der eingerichtet ist, um eine zweite Zeitspanne zu zählen, die länger als die erste Zeitspanne ist, und Zählen von Ein/Aus-Zyklen während einzelner Zeitspannen für die zweite Zeitspanne, um:
eine Fehlerreaktion einzuleiten, in Reaktion auf eine vorbestimmte Anzahl von Ein/Aus-Zyklen, die während jeder einzelnen Zeitspanne während der zweiten Zeitspanne erfasst werden oder wenn die zweite Zeitperiode abgelaufen ist, oder
eine Rücknahme der Zustandsänderung einzuleiten, in Reaktion auf die vorbestimmte Anzahl von Ein/Aus-Zyklen, die während mindestens einer einzelnen Zeitspanne während der zweiten Zeitspanne (650) nicht erfasst werden.

10. Verfahren (600) nach Anspruch 9, wobei das Vornehmen der Zustandsänderung das Einleiten eines Leckage-Validierungsprozesses umfasst, und wobei das Einleiten einer Rücknahme der Zustandsänderung das Zurücksetzen des Zeitgebers umfasst, der eingerichtet ist, um die zweite Zeitspanne zu zählen und den Leckage-Validierungsprozess zu verlassen.

11. Verfahren (600) nach Anspruch 10, wobei das Vornehmen der Zustandsänderung das Einleiten eines Leckage-Validierungsprozesses umfasst, und wobei das Einleiten der Rücknahme der Zustandsänderung umfasst:
Bestimmen, ob während der zweiten Spanne mindestens eine zweite Instanz vorhanden ist, in der die vorbestimmte Anzahl von Ein/Aus-Zyklen während einer entsprechenden zweiten einzelnen Zeitspanne nicht erfasst wird, und
Zurücksetzen des Zeitgebers, der eingerichtet ist, um die zweite Zeitspanne zu zählen und den Leckage-Validierungsprozess zu verlassen, in den eingetreten wurde, wenn die Zustandsänderung in Reaktion auf die Bestimmung eines Auftretens der zweiten Instanz vorgenommen wurde, oder um in Reaktion auf die vorbestimmte Anzahl von Ein/Aus-Zyklen, die während einer entsprechenden zweiten einzelnen Zeitspanne erfasst werden, wieder in den Leckage-Validierungsprozesses einzutreten.

12. Verfahren (600) nach Anspruch 11, des Weiteren umfassend das Einleiten einer Warteperiode vor dem Bestimmen, ob während der zweiten Instanz mindestens eine zweite Zeitspanne vorliegt, in der die vorbestimmte Anzahl von Ein/Aus-Zyklen nicht erfasst wird.

13. Verfahren (600) nach einem der Ansprüche 9-12, wobei das Bestimmen, ob eine Zustandsänderung vorzunehmen ist, das Einleiten einer separaten Zeitzählung aus jedem einer Vielzahl von Ein/Aus-Zyklen umfasst und, für jede separate Zeitzählung, das Bestimmen, ob eine Schwellenanzahl von Ein/Aus-Zyklen in einer entsprechenden Instanz der ersten Zeitspanne aufgetreten ist.

14. Verfahren (600) nach einem der Ansprüche 9-12, wobei das Bestimmen, ob eine Zustandsänderung vorzunehmen ist, das Zählen einer Anzahl von Ein/Aus-Zyklen, die aufgetreten sind, umfasst, bis eine Schwellenanzahl von Zyklen erreicht ist, und Vergleichen einer Zeit, um die Schwellenanzahl der Zyklen zu erreichen, mit der ersten Zeitspanne.

15. Verfahren (600) nach einem der Ansprüche 9-12, wobei das Bestimmen, ob eine Zustandsänderung vorzunehmen ist, aus jeder einer Vielzahl von Instanzen von Ein/Aus-Zyklen das Zählen einer Anzahl von Ein/Aus-Zyklen, die aufgetreten sind, bis eine Schwellenanzahl von Zyklen erreicht wurde, umfasst, und Vergleichen einer Zeit, um die Schwellenanzahl der Zyklen zu erreichen, mit der ersten Zeitspanne.

## Revendications

1. Un système de distribution d'eau (10) comprenant un ensemble de pompe (30) et un contrôleur (60) qui contrôle une opération de l'ensemble de pompe (30), **caractérisé en ce que** le contrôleur (60) est configuré pour:
contrôler un cyclage on et off de l'ensemble de pompe (30) sur la base des conditions de pression et de débit détectées dans le système (10);
mesurer une première période de temps;
compter un nombre de cycles on/off de l'ensemble de pompe (30);
déterminer si faire un changement d'état sur la base du nombre de cycles on/off et la première période de temps; et
en réponse à la détermination de faire le changement d'état, régler un minuteur configuré pour compter une deuxième période de temps qui est plus longue que la première période de temps et compter des cycles on/off pendant des périodes discrètes de temps pendant la deuxième période de temps pour:
initier une réaction de défaut en réponse à un nombre prédéterminé de cycles on/off étant détecté pendant chaque période de temps discrète pendant la deuxième période de temps ou si la deuxième période de temps est écoulée, ou
initier une récupération depuis le changement d'état en réponse au nombre prédéterminé de cycles on/off ne pas étant détecté pendant au moins une période de temps discrète pendant la deuxième période de temps.

2. Le système (10) selon la revendication1, dans lequel faire le changement d'état comprend initier un processus de validation de fuite, et dans lequel initier une récupération depuis le changement d'état comprend réinitialiser le minuteur configuré pour compter la deuxième période de temps et sortir du processus de validation de fuite.

3. Le système (10) selon la revendication1, dans lequel faire le changement d'état comprend initier un processus de validation de fuite, et dans lequel initier la récupération depuis le changement d'état comprend:
déterminer si, pendant la deuxième période, il y a au moins une deuxième instance dans laquelle le nombre prédéterminé de cycles on/off n'est pas détecté pendant une deuxième période de temps discrète correspondante, et
réinitialiser le minuteur configuré pour compter la deuxième période de temps et sortir du processus de validation de fuite saisi lors du changement d'état fait en réponse à la détermination d'une occurrence de la deuxième instance ou re-entrer le processus de validation de fuite en réponse au nombre prédéterminé de cycles on/off étant détecté pendant une deuxième période de temps discrète correspondante.

4. Le système (10) selon l'une quelconque des revendications précédentes, dans lequel déterminer si faire un changement d'état comprend déterminer si un nombre de seuil de cycles on/off s'est produit dans la première période de temps.

5. Le système (10) selon l'une quelconque des revendications 1-3, dans lequel déterminer si faire un changement d'état comprend initier un comptage de temps indépendant de chacun d'une pluralité de cycles on/off et déterminer, pour chaque comptage de temps indépendant, si un nombre de seuil de cycles on/off s'est produit dans une instance correspondante de la première période de temps.

6. Le système (10) selon l'une quelconque des revendications 1-3, dans lequel déterminer si faire un changement d'état comprend compter un nombre de cycles on/off qui s'est produit jusqu'à un nombre de seuil de cycles est atteint, et comparer un temps pour atteindre le nombre de seuil de cycles à la première période de temps.

7. Le système (10) selon l'une quelconque des revendications 1-3, dans lequel déterminer si faire un changement d'état comprend compter, à partir de chacun d'une pluralité de instances de cycles on/off, un nombre de cycles on/off that s'est produit jusqu'à un nombre de seuil de cycles est atteint, et comparer un temps pour atteindre le nombre de seuil de cycles à la première période de temps.

8. Le système (10) selon l'une quelconque des revendications précédentes, dans lequel l'interface utilisateur (66) est configurée pour permettre à un opérateur de sélectionner une valeur pour au moins une de la première période de temps, la deuxième période de temps or la période de temps discrète.

9. Un procédé (600) pour contrôler un système de distribution d'eau (10) qui comprend un ensemble de pompe (30) et un contrôleur (60) qui contrôle une opération de l'ensemble de pompe (30), **caractérisé en ce que** le procédé comprend:
contrôler un cyclage on et off de l'ensemble de pompe sur la base des conditions de pression et de débit détectées dans le système (610);
mesurer une première période de temps (620);
compter un nombre de cycles on/off de l'ensemble de pompe (630);
déterminer si faire un changement d'état sur la base du nombre de cycles on/off et la première période de temps (640); et
en réponse à la détermination de faire le changement d'état, régler un minuteur configuré pour compter une deuxième période de temps qui est plus longue que la première période de temps et compter des cycles on/off pendant des périodes discrètes de temps pendant la deuxième période de temps pour:
initier une réaction de défaut en réponse à un nombre prédéterminé de cycles on/off étant détecté pendant chaque période de temps discrète pendant la deuxième période de temps ou si la deuxième période de temps est écoulée, ou
initier une récupération depuis le changement d'état en réponse au nombre prédéterminé de cycles on/off de pas étant détecté pendant au moins une période de temps discrète pendant la deuxième période de temps (650).

10. Le procédé (600) selon la revendication9, dans lequel faire le changement d'état comprend initier un processus de validation de fuite, et dans lequel initier une récupération depuis le changement d'état comprend réinitialiser le minuteur configuré pour compter la deuxième période de temps et sortir du processus de validation de fuite.

11. Le procédé (600) selon la revendication10, dans lequel faire le changement d'état comprend initier un processus de validation de fuite, et dans lequel initier la récupération depuis le changement d'état comprend:
déterminer si, pendant la deuxième période, il y a au moins une deuxième instance dans laquelle le nombre prédéterminé de cycles on/off n'est pas détecté pendant une deuxième période de temps discrète correspondante, et
réinitialiser le minuteur configuré pour compter la deuxième période de temps et sortir du processus de validation de fuite saisi lors du changement d'état fait en réponse à la détermination d'une occurrence de la deuxième instance ou re-entrer le processus de validation de fuite en réponse au nombre prédéterminé de cycles on/off étant détecté pendant une deuxième période de temps discrète correspondante.

12. Le procédé (600) selon la revendication11, comprenant en outre initier une période d'attente avant la détermination si, pendant la deuxième instance, il y a un moins une deuxième période de temps dans laquelle le nombre prédéterminé de cycles on/off n'est pas détecté.

13. Le procédé (600) selon l'une quelconque des revendications 9-12, dans lequel déterminer si faire un changement d'état comprend initier un comptage de temps indépendant de chacun d'une pluralité de cycles on/off et déterminer, pour chaque comptage de temps indépendant, si un nombre de seuil de cycles on/off s'est produit dans une instance correspondante de la première période de temps.

14. Le procédé (600) selon l'une quelconque des revendications 9-12, dans lequel déterminer si faire un changement d'état comprend compter un nombre de cycles on/off qui s'est produit jusqu'à un nombre de seuil de cycles est atteint, et comparer un temps pour atteindre le nombre de seuil de cycles à la première période de temps.

15. Le procédé (600) selon l'une quelconque des revendications 9-12, dans lequel déterminer si faire un changement d'état comprend compter, à partir de chacun d'une pluralité de instances de cycles on/off, un nombre de cycles on/off that s'est produit jusqu'à un nombre de seuil de cycles est atteint, et comparer un temps pour atteindre le nombre de seuil de cycles à la première période de temps.
